# EUROPÄISCHE PATENTSCHRIFT

(11) **EP 0 879 801 B1**
(45) Veröffentlichungstag und Bekanntmachung des Hinweises auf die Patenterteilung: **28.02.2001**
(21) Anmeldenummer: 98108320.7
(22) Anmeldetag: 07.05.1998
(51) Int. Cl.: C03C 3/091, C03C 8/02, C03C 8/14, C03C 17/04

(54) **Blei- und cadmiumfreie Glaszusammensetzung zum Glasieren, Emaillieren und Dekorieren von Gläsern oder Glaskeramiken**
Lead- and cadmium-free glass composition for glazing, enameling and decoration of glasses or glass-ceramics
Composition de verre exempte de plomb et cadmium pour le glaçage, l'émaillage et le décoration de verres ou de vitro-céramiques

(30) Priorität: 24.05.1997 DE 19721737
(43) Veröffentlichungstag der Anmeldung: 25.11.1998
(73) Patentinhaber: Schott Glas, 55122 Mainz (DE); Carl-Zeiss-Stiftung trading as Schott Glas, 55122 Mainz (DE)
(72) Erfinder: Siebers, Friedrich, Dr., 55283 Nierstein (DE); Becker, Otmar, Dr., 63225 Langen (DE); Weinberg, Waldemar, Dr., 55444 Seibersbach (DE); Auchter-Krummel, Petra, Dr., 55578 Vendersheim (DE)

(56) Entgegenhaltungen:
- EP-A- 0 220 333
- EP-A- 0 460 863
- EP-A- 0 539 707
- EP-A- 0 794 158
- DE-A- 4 201 286
- DE-A- 4 241 411
- DE-C- 19 512 847
- US-A- 5 326 728

## Beschreibung

Die Erfindung betrifft blei- und cadmiumfreie Glaszusammensetzungen zum Glasieren, Emaillieren und Dekorieren von Gläsern oder Glaskeramiken, die nach der Kristallisation Hochquarz- und/oder Keatit-Mischkristalle als Hauptkristallphase enthalten und sie betrifft das Verfahren zur Herstellung einer mit diesen Glaszusammensetzungen versehenen Glaskeramik.

Übliche Glaskeramiken enthalten Hochquarz- und/oder Keatit-Mischkristalle als Hauptkristallphase, die für den niedrigen Wärmeausdehnungskoeffizienten verantwortlich sind. Je nach Kristallphase und Kristallitgröße können solche Glaskeramiken transparent, transluzent oder opak vorliegen. Die Einfärbung über Farboxide wird je nach gewünschter Anwendung vorgenommen. Hauptsächliches Einsatzgebiet solcher Glaskeramiken mit niedriger Wärmedehnung sind temperaturwechselbeständige Laborgeräte, Kochgeschirre, Brandschutzgläser, Kaminsichtscheiben und besonders auch beheizbare Platten, z.B. Kochflächen.

Dekorüberzugsmassen werden im allgemeinen in die Kategorien "Glasuren" bzw. "Emails" eingeteilt. Die Glasuren bestehen in der Regel aus einem klaren oder eingefärbten Glas (Glasfluß), während Emails Überzugsmassen sind, die färbende, nichttransparente Materialien, wie Pigmente enthalten. Als Pigmente können farbige, anorganische Verbindungen verwendet werden. Hierbei dürfen die Pigmente üblicherweise vom Glasfluß nicht oder nur geringfügig angegriffen werden.

Glasuren und Emails werden auch zum Beschichten und Veredeln von Glaskeramiken eingesetzt. Großflächige Beschichtungen dienen oft dem Schutz, der Abdekkung oder zur Erzielung eines gewünschten Aussehens. Dekorationen werden eingesetzt für Beschriftungen, zur Erzielung eines gewünschten Designs oder auch zur Unterstützung bestimmter technischer Funktionen etwa im Fall von Display-Fenstern oder der Markierung von Kochzonen.

Die Glasur oder das Email wird bei Temperaturen, die unterhalb des Erweichungspunktes des zu beschichtenden Gegenstandes liegen, eingebrannt, wobei die jeweilige Glaszusammensetzung der Glasur bzw. des Emails aufschmilzt und sich stabil mit der Oberfläche des Gegenstandes verbindet. Die Einbrenntemperaturen liegen in der Regel unterhalb des Erweichungspunktes des zu beschichtenden Gegenstandes, damit keine unkontrollierte Verformung auftreten kann. Der Brand dient auch der Verflüchtigung organischer Hilfsstoffe, die z. B. als Suspendiermittel für den Auftrag der Glasur bzw. des Emails eingesetzt werden.

Bei einer Beschichtung von Glaskeramiken oder Gläsern mit einem Wärmeausdehnungskoeffizienten im Bereich von ca. 4 x 10⁻⁶/K und größer ist es möglich, Glasuren oder Emails mit angepaßten Wärmeausdehnungskoeffizienten zu finden. Dabei wird nach dem Stand der Technik angestrebt, daß die Dekorüberzüge einen geringfügig niedrigeren Wärmeausdehnungskoeffizienten aufweisen, als der zu beschichtende Gegenstand. Dadurch soll gewährleistet werden, daß die Glasur oder das Email beim Abkühlen nach dem Einbrand unter Druckspannung gerät und somit auf die Eigenschaften des Substrats keine negative, insbesondere die Festigkeit reduzierende Wirkung ausübt. Bei nichtangepaßten Wärmeausdehnungskoeffizienten werden sich beim Abkühlen Spannungen zwischen Dekorüberzug und Substrat ausbilden, wodurch Craquelles oder Risse entstehen, die bis in das Substratmaterial einlaufen können. Durch die Fehlanpassung werden die hervorgerufenen Spannungen die Haftfestigkeit verschlechtern. Bei größerer Fehlanpassung können die Dekorüberzüge sofort oder im Laufe der Zeit während des Gebrauchs vom Substrat abplatzen.

Probleme ergaben sich bisher bei der Glasur- bzw. Email-Dekoration von Glaskeramiken mit niedriger Wärmeausdehnung auf Basis von Hochquarz- oder Keatit-Mischkristallen, die durch thermische Behandlung, der sogenannten Keramisierung, eines geeigneten Ausgangsglases hergestellt werden. Solche Glaskeramiken zeichnen sich durch eine Wärmeausdehnung von kleiner 2 x 10⁻⁶/K im Temperaturbereich zwischen 20 und 700°C aus. Unter Berücksichtigung des Erweichungspunktes und der thermischen Beständigkeit dieser Glaskeramiken wird die Dekoration üblicherweise bei Temperaturen unter 1200°C erfolgen. Bei den Glaskeramiken wird das Einbrennen der Glasur bzw. des Emails vorzugsweise während des Keramisierungsprozesses durchgeführt, d.h. die Dekorüberzüge werden auf das Grünglas aufgebracht und während der Keramisierung eingebrannt. Für solche Glaskeramiken mit niedrigem Wärmeausdehnungskoeffizienten sind bisher keine wirtschaftlich herstellbaren Dekorüberzüge mit angepaßtem Wärmeausdehnungskoeffizienten verfügbar. Man hat auf verschiedenen Wegen versucht, dieses Problem der Fehlanpassung zu lösen, um das Auftreten gravierender Nachteile bei den gewünschten Eigenschaften zu umgehen.

Insbesondere bei vollflächigen Beschichtungen oder dichten Dekorierungen tritt die Erniedrigung der Biegezugfestigkeit als gravierender Nachteil zutage. Die Erniedrigung der Biegezugfestigkeit beruht zum einen auf der infolge der Fehlanpassung unvermeidlichen Ausbildung von Spannungen zwischen Dekor und Substrat und zum anderen darauf, daß für die Haftung des Dekors auf dem Substrat eine gewisse Anlösung des Substrats durch das Dekor und die Ausbildung einer Reaktionsschicht erforderlich ist. Es ist möglich, dieses Problem der Erniedrigung der Biegezugfestigkeit durch eine sehr lichte Dekorierung zu umgehen, jedoch sind damit vollflächige Beschichtungen zur Erzielung eines Schutzes oder dichtere Dekorierungen als Designausführung nicht möglich. Für eine ausreichende Biegezugfestigkeit beim Handling, Einbau und späteren Gebrauch der dekorierten Glaskeramiken wird eine mittlere Biegezugfestigkeit größer als 30 MPa als notwendig angesehen.

Beispielsweise durch Aufbringen von Dekorüberzügen mit geringen Schichtdicken können die resultierenden Spannungen auch bei Fehlanpassungen der Wärmeausdehnungskoeffizienten verringert werden. Dies bedeutet aber auch, daß die Farbwirkung (Deckkraft, Farbeindruck) sowie die Schutzwirkung erheblich eingeschränkt werden können.

Bisher zum Überzug und/oder zur Dekoration von Glaskeramiken mit niedrigen Wärmeausdehnungskoeffizienten verwendete Glasuren und Emails enthalten häufig Blei und z.T. auch Cadmium. Neben seiner günstigen Wirkung hinsichtlich einer Erniedrigung der Einbrenntemperaturen erlaubt es die Verwendung von Blei und Cadmium gut haftende Dekorüberzüge zu realisieren, obwohl der Wärmeausdehnungskoeffizient in der Größenordnung von 5 x 10⁻⁶/K bis sogar 10 x 10⁻⁶/K liegt. Die Ursache, warum diese Fehlanpassungen zwischen Dekorüberzug und Glaskeramik-Substrate ohne Schaden toleriert werden, wird der Plastizität bleihaltiger Flüsse zugeschrieben. Zusätze aus Blei und Cadmium sind darüber hinaus günstig für die Festigkeit dekorierter Glaskeramiken und verleihen den Glasflüssen und Emails eine vergleichsweise gute chemische Beständigkeit gegenüber schwachen Säuren und Basen, wie sie im Haushalt oder auch der Industrie als Reinigungsmittel eingesetzt werden oder in Lebensmitteln vorkommen.

Trotz dieser günstigen Eigenschaften bleihaltiger Beschichtungen dürfen Glasuren und Emails heute wegen der ungünstigen toxikologischen Eigenschaften von Blei und Cadmium diese Elemente nicht mehr enthalten. In der Literatur sind daher bereits verschiedene Wege vorgeschlagen worden, um Glaskeramiken mit niedriger Wärmeausdehnung ohne die Verwendung von Blei- oder Cadmiumverbindungen zu beschichten.

In der deutschen DE 42 41 411 A1 wird versucht, das Problem der Fehlanpassung zwischen Glaskeramik-Substrat und Dekorschicht durch Zusatz von chemisch inerten, optisch inaktiven, elastischen anorganischen Stoffen zu lösen. Solche Zusätze bestehen z.B. aus Glimmerplättchen, die dem Dekorüberzug eine gewisse Plastizität verleihen. Durch diese Zusätze sind haftfeste und abriebarme Dekorüberzüge realisierbar. Nachteilig ist die aufwendigere Herstellung der Dekorüberzüge, sowie eine nicht immer gewünschte Beeinflussung von Farbton und Reflexion der Überzüge.

Aus der deutschen DE 42 01 286 C2 ist die Verwendung von blei- und cadmium-freien Glaszusammensetzungen zum Glasieren und Emaillieren von Gläsern und Glaskeramiken mit einer Wärmeausdehnung von weniger als 5,0 x 10⁻⁶/K bekannt. Die vorgeschlagenen Zusammensetzungen enthalten Li₂O 0 - 12 Gew.-%, MgO 0 - 10 Gew.-%, CaO 3 - 18 Gew.-%, B₂O₃ 5 - 25 Gew.-%, Al₂O₃ 3 - 18 Gew.-%, Na₂O 3 - 18 Gew.-%, K₂O 3 - 18 Gew.-%, BaO 0 - 12 Gew.-%, SiO₂ 25 - 55 Gew.-%, TiO₂ 0 - 5 Gew.-% und ZrO₂ 0 - <3 Gew.-%. Die relativ hohen Gehalte an Alkalien und Erdalkalien, hier besonders K₂O und CaO, gestatten es, Dekorüberzüge mit guter Haftfestigkeit zu realisieren. Nachteilig sind die hohen Alkali- und Erdalkali-Gehalte für die chemische Beständigkeit gegenüber Säuren und im Hinblick auf die Festigkeit der dekorierten Glaskeramiken.

Die US-PS 5,326,728 beansprucht eine bleifreie Fritte mit SiO₂ 35 - 50 Gew.-%, B₂O₃ 23 - 30 Gew.-%, Al₂O₃ 10 - 22 Gew.-%, Li₂O 1 - 3 Gew.-%, Na₂O 0 - 3 Gew.-%, K₂O 2 - 5 Gew.-%, CaO 1 - 5 Gew.-%, TiO₂ 0 - 2 Gew.-% und ZrO₂ 0 - 5 Gew.-%, wobei die Summe Li₂O + Na₂O + K₂O kleiner 8 Gew.-% und Summe CaO + MgO + ZnO + BaO + SrO kleiner 7 Gew.-% ist. Auch bei diesen Zusammensetzungen sind Zusätze von K₂O und CaO erforderlich, um ausreichende Haftfestigkeiten trotz der Fehlanpassung zu erreichen. Für hohe Ansprüche an die Säurebeständigkeit und die Festigkeit der dekorierten Glaskeramiken sind diese Zusammensetzungen aber oft nicht ausreichend.

Insbesondere die Anwesenheit von K₂O in Mengen >2 Gew.-% hat sich als äußerst schädlich für die Biegezugfestigkeit dekorierter Glaskeramiken erwiesen. Das Kalium-Atom ist sehr mobil beim Einbrand des Dekors und reichert sich in der Nähe der Reaktionsschicht zwischen Glaskeramik und Dekor an. Dadurch werden zusätzliche Spannungen erzeugt, die die Biegezugfestigkeit deutlich erniedrigen. Die Anwesenheit von K₂O in Gehalten von 2 Gew.-% und größer gestattet zwar die Anwendung in Form lichter Dekorausführungen. Vollflächige Beschichtungen zum Schutz oder dichte Dekorierungen zur Erzielung von gewünschten ästhetischen Designausführungen sind damit jedoch nur eingeschränkt realisierbar.

Die Aufgabe der Erfindung besteht daher darin, blei- und cadmiumfreie Glaszusammensetzungen zum Glasieren, Emaillieren und Dekorieren von Gläsern oder Glaskeramiken, die Hochquarz- oder Keatit-Mischkristallen als Hauptkristallphase enthalten und eine niedrige Wärmeausdehnung von < 2 x 10⁻⁶/K aufweisen, vorzustellen, die allen Anforderungen genügen. Die Glaszusammensetzungen sollen insbesondere in einem niedrigen und relativ breiten Temperaturbereich problemlos verarbeitet werden können und darüber hinaus Glasuren bzw. Emails liefern, die für den Gebrauch im technischen und häuslichen Bereich sehr gute Eigenschaften bezüglich Haftfestigkeit, chemischer Beständigkeit gegenüber Säuren und Laugen, Glanz, Abriebfestigkeit, Fleckunempfindlichkeit zeigen. Ferner sollen die mit den Glaszusammensetzungen dekorierten Glaskeramiken hohe Festigkeiten besitzen.

Diese Aufgabe wird durch die im Patentanspruch 1 beschriebene Glaszusammensetzung gelöst.

Es hat sich gezeigt, daß die erfindungsgemäße Glaszusammensetzung die Eigenschaften der PbO- und CdO-haltigen Glaszusammensetzungen bezüglich Haftfestigkeit, chemischer Beständigkeit und Festigkeit erreicht. Bei vollflächig dekorierten Glaskeramiken erreicht die Biegezugfestigkeit nach dem Einbrand Werte größer als 30 MPa. Darüber hinaus ergeben sich sogar Vorteile hinsichtlich geringerer Fleckempfindlichkeit gegenüber Kontamination. Bei der erfindungsgemäßen Glaszusammensetzung werden viskositätsabsenkende Komponenten, wie Alkalien, B₂O₃ sowie ggf. Erdalkalien, ZnO und F in relativ engen Grenzen mit Oxiden kombiniert, die am Aufbau des Glasnetzwerks beteiligt sind, insbesondere SiO₂, Al₂O₃ ggf. mit geringen Anteilen an TiO₂, ZrO₂, La₂O₃, SnO₂, Bi₂O₃ oder P₂O₅.

Die Summe der Alkalien Li₂O, Na₂O und K₂O soll zwischen 1 bis 10 Gew.-% liegen. Der Zusatz von Alkalien ist erforderlich, um die gewünschten niedrigen Einbrenntemperaturen zu erreichen. Neben der viskositätsabsenkenden Wirkung sind die Alkalien auch in hohem Maße für den Glanz der aufgebrachten Dekorschicht verantwortlich. Höhere Alkaligehalte verschlechtern die Säurebeständigkeit der aufgebrachten Schichten. Auch wirken sich höhere Alkaligehalte negativ auf die Festigkeit der beschichteten Glaskeramiken aus. Der Li₂O-Gehalt und der Na₂O-Gehalt sind auf je 5 Gew.-% begrenzt. Der K₂O-Gehalt muß unter 2 Gew.-% betragen. K₂O ist günstig für die Haftfestigkeit der aufgebrachten Dekorschichten, ist aber weniger wirksam hinsichtlich der Absenkung der Viskosität. Ganz besonders negativ wirken sich höhere K₂O-Gehalte auf die Festigkeit der dekorierten Glaskeramiken aus. Bevorzugt wird ein Li₂O-Gehalt von 1 bis 4 Gew.-% und ein Na₂O-Gehalt von 0 bis 3 Gew.-%, sowie ein Alkaligehalt von 2 bis 7 Gew.-%.

Der B₂O₃-Gehalt liegt zwischen 15 und 27 Gew.-%. B₂O₃-Zusätze sind erforderlich, um die Glasschmelze gegenüber unerwünschter Entglasung zu stabilisieren. B₂O₃ senkt die Viskosität des Glases und ermöglicht das Einbrennen bei niedrigen Temperaturen. B₂O₃ beeinflußt ferner den Glanz positiv. Bei höheren B₂O₃-Gehalten als 27 Gew.-% verschlechtert sich die Säurebeständigkeit der Beschichtung. Geringere Gehalte als 15 Gew.-% führen zu einem unzureichenden Viskositätsverhalten. Besonders günstige Eigenschaften erhalten Glaszusammensetzungen mit einem B₂O₃-Gehalt von 15 bis 23 Gew.-%.

SiO₂ und Al₂O₃ sind Hauptbestandteile des erfindungsgemäßen Glases. SiO₂ ist als Netzwerkbildner verantwortlich für die Stabilität, die chemische Beständigkeit und die Festigkeit. Der SiO₂-Gehalt liegt zwischen 43 und 58 Gew.-%. Höhere SiO₂-Gehalte sind ungünstig wegen ihrer viskositätserhöhenden Wirkung und verhindern das Glattfließen der Beschichtung beim Einbrennen. Unterhalb von 43 Gew.-% ist die Säurebeständigkeit der Glaszusammensetzung zu gering. Bevorzugt wird ein SiO₂-Gehalt zwischen 48 bis 57 Gew.-%. SiO₂ wirkt sich günstig auf die Festigkeit der dekorierten Glaskeramiken aus. Der Al₂O₃-Gehalt liegt zwischen 10 und 20 Gew.-%. Al₂O₃ fördert die Stabilität des Glases und verbessert das Abriebverhalten und die Festigkeit der dekorierten Glaskeramiken. Höhere Gehalte als 20 Gew.-% aber erhöhen die Viskosität unzulässig und verschlechtern den Glanz. Geringere Gehalte als 10 Gew.-% weisen dagegen unzureichende Festigkeitswerte auf. Besonders günstige Eigenschaften erhalten Glaszusammensetzungen mit einem Al₂O₃-Gehalt von 14 bis 19 Gew.-%.

Zusätze von Erdalkalien unterstützen die viskositätsabsenkende Wirkung der Alkalien. Glanz und Haftfestigkeit werden sogar verbessert. Als Zusätze sind maximal 3 Gew.-% MgO, maximal 4 Gew.-% CaO sowie maximal je 4 Gew.-% SrO und BaO zulässig. Werden die angeführten Obergrenzen überschritten, verschlechtern sich Säurebeständigkeit und Festigkeit in unzulässiger Weise. In bevorzugter Form liegt die Summe der Erdalkalien bei 1 bis 9 Gew.-%.

Zur Verbesserung des Viskositätsverhaltens und des Abriebs kann die Glaszusammensetzung maximal 4 Gew.-% ZnO enthalten. Ein zu hoher ZnO-Gehalt führt allerdings zu einer Verschlechterung der Festigkeit.

Sb₂O₃-Zusätze sind bis zu 2 Gew.-% zulässig und fördern die Haftfestigkeit der Dekorüberzüge. Höhere Gehalte sind toxikologisch unerwünscht und verschlechtern die Säurebeständigkeit.

Zur Verbesserung der Säurebeständigkeit kann das Glas ferner noch TiO₂ in Mengen zwischen 0 und 3 Gew.-% enthalten. Höhere TiO₂-Gehalte gefährden die Stabilität des Glases. ZrO₂ kann in Mengen bis zu 4 Gew.-%, bevorzugt bis zu 3 Gew.-% im Glas enthalten sein. ZrO₂-Zusätze fördern die chemische Beständigkeit gegenüber Laugen und die Festigkeit der dekorierten Glaskeramiken. Höhere Gehalte verschlechtern den Abrieb und gefährden die Stabilität des Glases gegenüber Entglasung.

Das Glas kann weiterhin Zusätze von Fluor in Höhe von bis zu 3 Gew.-%, bevorzugt bis zu 2 Gew.-% enthalten. Der Zusatz von F verringert die Viskosität und damit die Einbrenntemperatur. Fluor-lonen ersetzen eine entsprechende Menge von Sauerstoff-Anionen im Glasgerüst. Höhere Gehalte verschlechtern jedoch die Säurebeständigkeit des Glases. Als weitere Zusätze können Bi₂O₃, La₂O₃, SnO₂ und P₂O₅ in dem Glas vorhanden sein. Die maximale Menge der einzelnen Oxide soll 3 Gew.-% nicht überschreiten. Kommen mehrere dieser Oxide gemeinsam zur Anwendung, so soll die Summe der Gehalte dieser Oxide aber 5 Gew.-% nicht überschreiten. SnO₂-Zusätze verbessern die chemische Beständigkeit, führen jedoch zu einer Erhöhung der Viskosität. La₂O₃, Bi₂O₃ und P₂O₅ verbessern die Schmelzbarkeit, höhere Gehalte gefährden jedoch die Entglasungsstabilität und die chemische Beständigkeit.

Glaspulver aus Gläsern der erfindungsgemäßen Zusammensetzung können problemlos mit Pigmenten bis zu einem Anteil von 30% Pigment vermischt und dann zur Herstellung farbiger Überzüge, Emails und/oder Dekore verwendet werden. Als Pigmente werden dabei übliche anorganische Materialien benutzt, die bei Brenntemperaturen gegenüber der Glaszusammensetzung im wesentlichen beständig sind. Durch gezielte Zugabe färbender Oxide, die sich in dem Glas lösen, kann die Glasur aber auch in sich gefärbt werden.

Die erfindungsgemäßen Gläser werden zuerst homogen erschmolzen und aus dem gebildeten Glas wird dann durch Mahlen ein Glaspulver mit einer mittleren Korngröße von < 10 µm, bevorzugt < 5 µm, hergestellt. Ausgehend von dem so erhaltenen Glaspulver werden dann, ggf. nach Zugabe entsprechender Pigmente, die zu dekorierenden Glaskeramiken beschichtet. Bei der Beschichtung werden allgemein bekannte technische Verfahren wie z.B. Tauchen, Spritzen, Siebdrucken usw. eingesetzt. Die Verarbeitung erfolgt unter Zusatz üblicher organischer Hilfsstoffe und/oder geeigneter Suspendiermittel. Zum Beispiel wird beim Siebdrucken das Pulver mit einem Siebdrucköl vermischt, die Paste mit einem Dreiwalzenstuhl homogenisiert und dann im direkten Siebdruck oder nach dem Abziehbildverfahren (indirekter Siebdruck) aufgetragen. Alternativ erlaubt das Vermischen mit thermoplastischen Hilfsstoffen einen Siebdruck unter Wärmeeinwirkung. Nach dem Einbrennen auf der zu dekorierenden Glaskeramik erhält man Schichten, deren Dicken üblicherweise zwischen 2 und 9 µm liegen. Die zu beschichtenden Glaskeramiken liegen vorzugsweise im glasigen Ausgangszustand vor. Das Einbrennen der Glasur- bzw. Emailschichten wird bevorzugt während des Keramisierungsprozesses durchgeführt. Die Zusammensetzungen der zu beschichtenden Glaskeramiken und der Keramisierungsprozeß werden in der Literatur z.B. in der EP 220 333 B1 beschrieben. Die Keramisierung erfolgt, je nachdem ob Hochquarz- oder Keatit-Mischkristalle als Hauptkristallphase gewünscht ist, im Temperaturbereich von 800 - 950°C bzw. 900 - 1200°C. Für das Erzielen einer ausreichenden Kristalldichte wird üblicherweise vor der Keramisierung eine Keimbildung bei Temperaturen zwischen 650 und 800°C vorgeschaltet. Besonders günstige Eigenschaften der aus den erfindungsgemäßen Gläsern hergestellten beschichteten Glaskeramiken erhält man dann, wenn man aus dem angegebenen Zusammensetzungsbereich Gläser auswählt, deren Transformations-, Erweichungs- und Verarbeitungstemperaturen deutlich höher liegen, als es dem bisherigen Stand der Technik entspricht. So liegen die Transformationstemperaturen (Tg) bei 450 - 650°C, insbesonders bei 490 - 590°C, die Erweichungstemperaturen (E_{w}) bei 600 - 850°C, insbesonders bei 640 - 800 °C und die Verarbeitungstemperaturen (V_{A}) bei 880 bis 1150°C, insbesonders bei 900 - 1120°C. Die Wärmeausdehnungskoeffizienten a zwischen 20 - 300°C liegen bei 3,5 bis 7 x 10⁻⁶/K, bevorzugt bei 4 bis 6 x 10⁻⁶/K. Die relativ hohen Temperaturen für Tg, E_{w}, V_{A} wirken sich besonders günstig auf die thermische Beständigkeit der Dekorüberzüge aus. So zeigt sich auch nach 75 Stunden bei 670°C praktisch keine visuell wahrnehmbare Farbveränderung.

Mit den erfindungsgemäßen Gläsern können auf Glaskeramik-Substraten Dekorüberzüge erzeugt werden, die bezüglich Glanz und Abriebbeständigkeit bisherigen PbO- und CdO-haltigen Gläsern entsprechen. Bezüglich thermischer Beständigkeit und Fleckunempfindlichkeit sind die erfindungsgemäßen Gläser den PbO- und CdO-haltigen Gläsern sogar überlegen. Ein besonderer Vorteil der erfindungsgemäßen Gläser besteht in ihrer ausgezeichneten Haftung, trotz der sehr großen Unterschiede in der Wärmeausdehnung zwischen Dekorüberzug und Glaskeramik-Substraten, sowie guter chemischer Beständigkeit und in der hohen Festigkeit der damit beschichteten Glaskeramiken. Vollflächig dekorierte Glaskeramik-Produkte besitzen nach dem Einbrand Biegezugfestigkeiten größer als 30 MPa. Selbst bei größeren Schichtdicken der Dekorüberzüge z.B. bis 9 µm zeigen sich auch bei Temperaturschock keine Abplatzungen von der Glaskeramik, wobei große Unterschiede in der Wärmeausdehnung zwischen Dekorüberzug und Glaskeramik toleriert werden. Diese gute Haftung wird über längere Zeiträume im praktischen Einsatz, verbunden mit extremen Temperaturwechseln, beibehalten. Die chemische Beständigkeit und hier besonders die Beständigkeit gegenüber Säuren ist gegenüber bisherigen bleifreien Zusammensetzungen vorteilhaft. Die Festigkeit der mit den erfindungsgemäßen Gläsern beschichteten Glaskeramiken ist besonders bei dichten Dekorausführungen gegenüber bisherigen bleifreien Zusammensetzungen deutlich verbessert.

Die vorliegende Erfindung wird mit Hilfe der folgenden Beispiele weiter verdeutlicht:

Tabelle 1 enthält 16 Beispiele für Glaszusammensetzungen in Gew.-% und die dazugehörigen Meßgrößen, die die Viskosität kennzeichnen, wie Transformationstemperatur (Tg in °C), Erweichungstemperatur (E_{w} in °C), die Verarbeitungstemperatur (V_{A} in °C) sowie den Wärmeausdehnungskoeffizienten α zwischen 200 und 300°C in 10⁻⁶/K und die Dichte in g/cm³. Die Beispiele 15 und 16 liegen außerhalb des erfindungsgemäßen Zusammensetzungsbereichs und sind zu Vergleichszwekken mit aufgeführt.

Die Gläser gemäß den Beispielen 1 bis 16 werden zu Pulvern mit einer mittleren Korngröße von 1 bis 3 µm vermahlen. Das so erhaltene Pulver wird gemäß Tabelle 2 mit Pigmenten vermischt und unter Zusatz von Siebdrucköl auf Fichtenölbasis zu einer Siebdruckpaste verarbeitet. Es werden Viskositäten zwischen 1 und 5 Pa·s mit einem Brookfield-Rheometer gemessen. Mit den erhaltenen Pasten werden zu Glaskeramiken umwandelbare Ausgangsgläser (gem. EP 220 333 B1) bedruckt. Die durchgeführten Siebdrucke beinhalten sowohl verschiedene Dekorausführungen als auch vollflächig bedruckte Prüfmuster. Dabei wird ein Sieb der Maschenweite 150 T verwendet. Die Beschichtungen werden in einem kontinuierlichen Fertigungsofen oder einem Laborofen eingebrannt. Dabei findet auch die Keramisierung des Ausgangsglases in eine Glaskeramik mit Hochquarz- (Versuchs-Nr. 1-16) bzw. Keatit-Mischkristallen (Versuchs-Nr. 17 - 20) als vorherrschender Kristallphase statt. Die Maximaltemperaturen beim Einbrand sind in Tab. 2 aufgeführt. Nach dem Einbrennen und Keramisieren weisen die Beschichtungen Schichtdicken von ca. 4 µm auf. Die gemessenen Eigenschaften sind in Tab. 2 aufgeführt. Die Haftfestigkeit wird an vollflächig dekorierten Prüfmustern durchgeführt. Dabei wird die eingebrannte Dekorschicht mit einem Streifen transparenten Klebefilms (Tesafilm® Typ 104, Fa. Beiersdorf) beklebt. Der Streifen wird fest angerieben und dann ruckartig abgerissen. Die Beurteilung richtet sich danach, wieviele Partikel der Beschichtung an dem Streifen haften. Hierbei bedeutet 0 = keine haftenden Partikel feststellbar, 1 = wenig anhaftende Partikel, für praktische Anwendung unkritisch, 2 = größere Anzahl anhaftender Partikel, 3 = flächiges Abreißen der Dekorschicht.

Die Säurebeständigkeit wird nach einem ähnlichen Schema bezüglich visuell feststellbarer Farbveränderung bewertet, dabei bedeutet 0 = kein erkennbarer Angriff, 1 = sehr geringer Angriff, unkritisch, 2 = merklicher Angriff, 3 = weitgehender Angriff und 4 = völlige Veränderung der Dekorschichten. Es wird mit 4 %iger Essigsäure bei Siedetemperatur für 4 h geprüft. Diese Prüfmethode beinhaltet einen relativ starken Angriff, um auch für praktische Anwendungen mit höchsten Anforderungen an die Säurebeständigkeit eine Aussage zu gewinnen.

Die Festigkeit wird an dekorierten Prüfmustern der Abmessung 100 x 100 mm mit einer mittig vollflächig bedruckten quadratischen Form aus 50 x 50 mm getestet. Die Biegezugfestigkeit wird nach der Doppelringmethode (DIN 52300, Teil 5) gemessen. Für jede Beschichtung werden mindestens 12 Prüfmuster bezüglich ihrer Biegezugfestigkeit gemessen. Es wird der Mittelwert in Tabelle 2 angegeben.

Die gemessenen Werte zeigen, daß die erfindungsgemäßen Zusammensetzungen sowohl über gute Haftfestigkeiten als auch über gute Säurebeständigkeit und vergleichsweise hohe Biegefestigkeiten (> 30 MPa) verfügen. Diese Kombination wird mit den Vergleichszusammensetzungen nicht erreicht. Die genannten Eigenschaften kommen denen PbO- und/oder CdO-haltiger Glasuren und Emails nahe. Darüber hinaus weisen die Zusammensetzungen gegenüber diesen aber deutlich verbesserte Fleckunempfindlichkeit und thermische Beständigkeit auf. Auch Glanz, Abriebverhalten, Beständigkeit gegenüber basischen Reinigungsmitteln und Reinigungsverhalten nach üblichen und bekannten Standardmethoden zeigen, daß die erfindungsgemäßen Glaszusammensetzungen in hervorragender Weise dafür geeignet sind, PbO- und CdO-haltige Gläser zu substituieren.

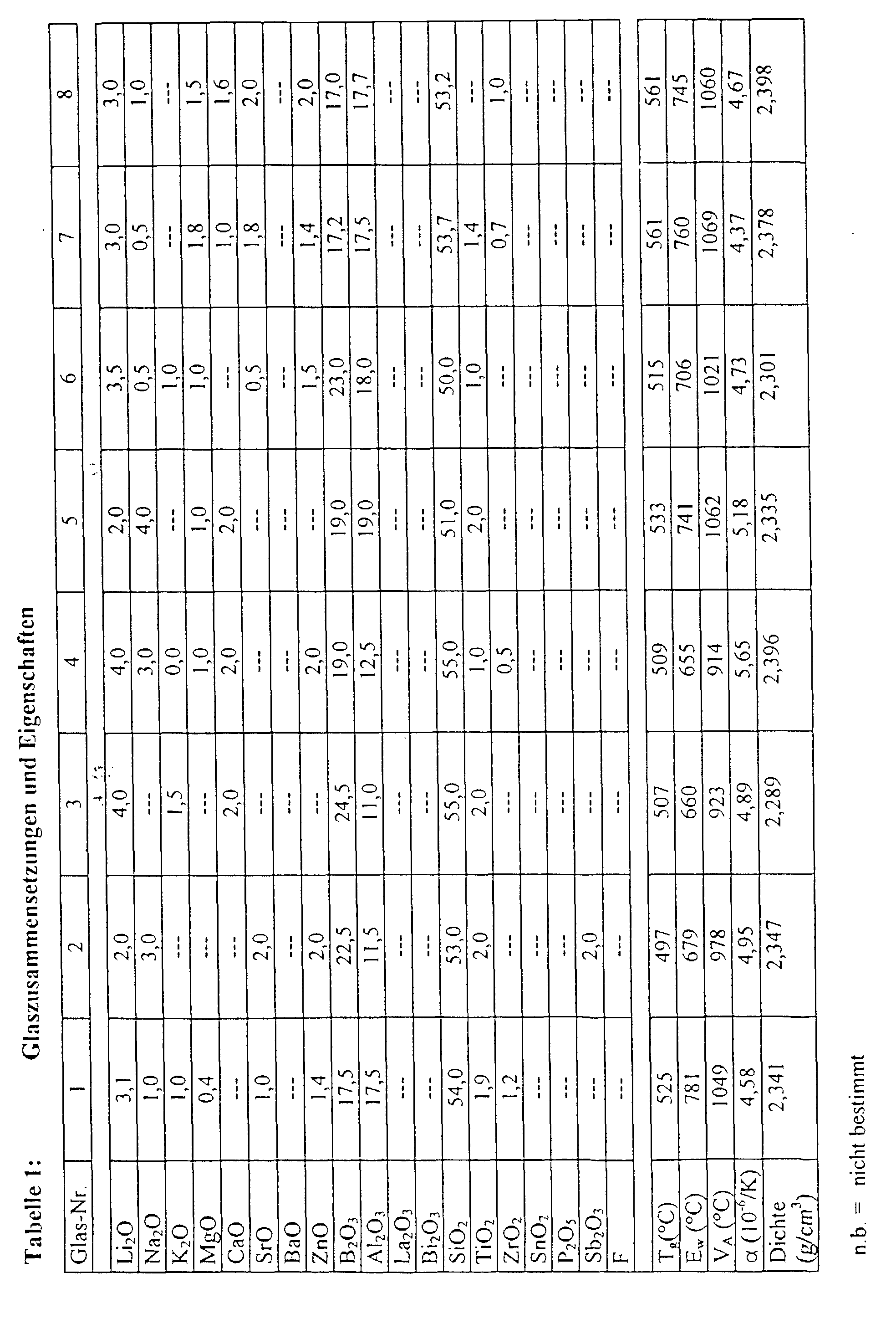

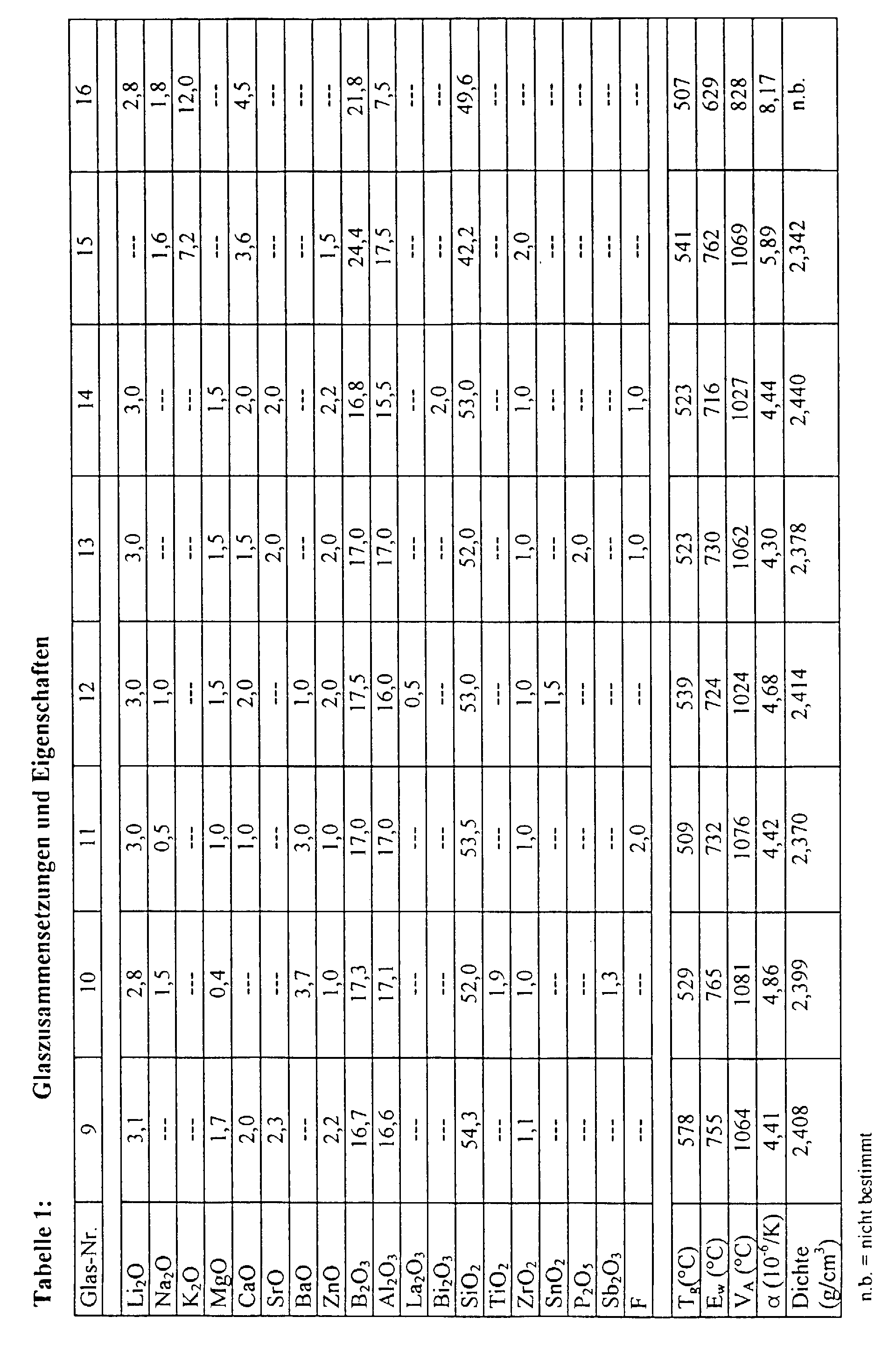

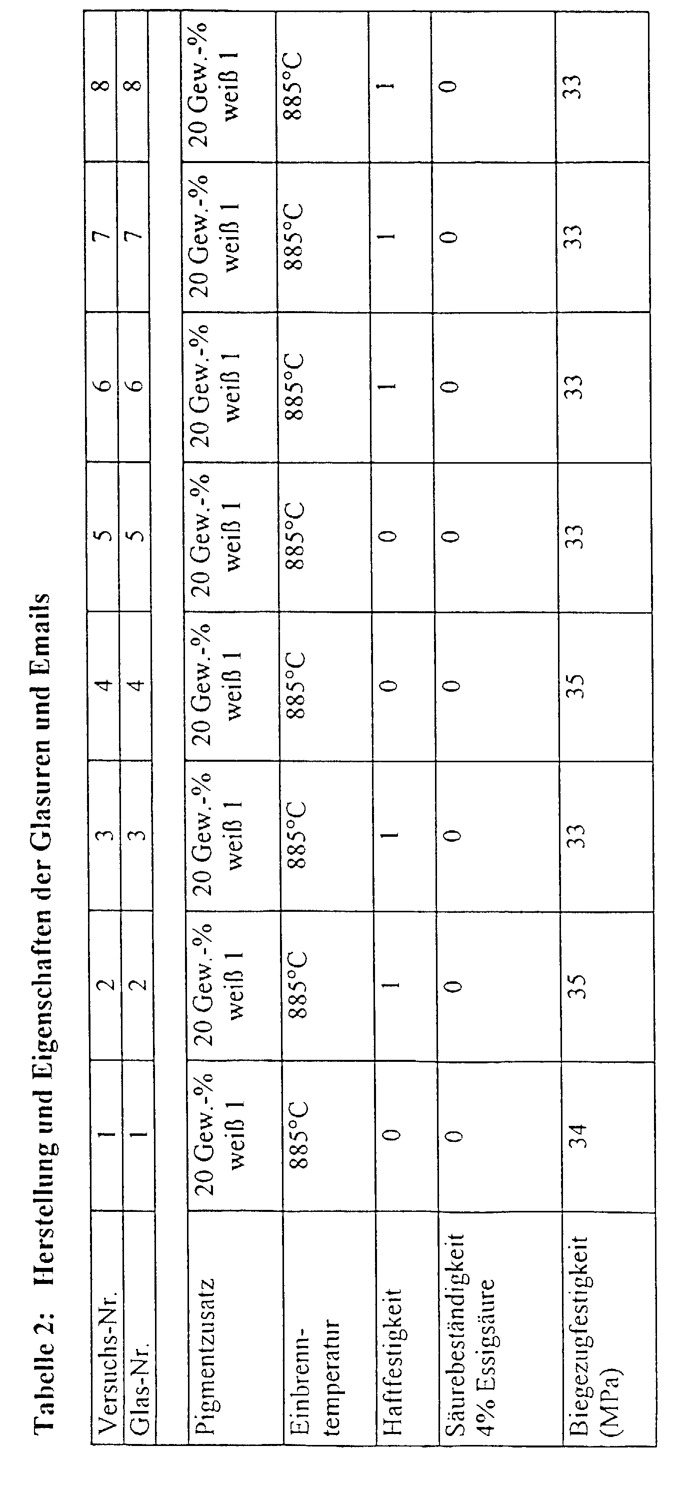

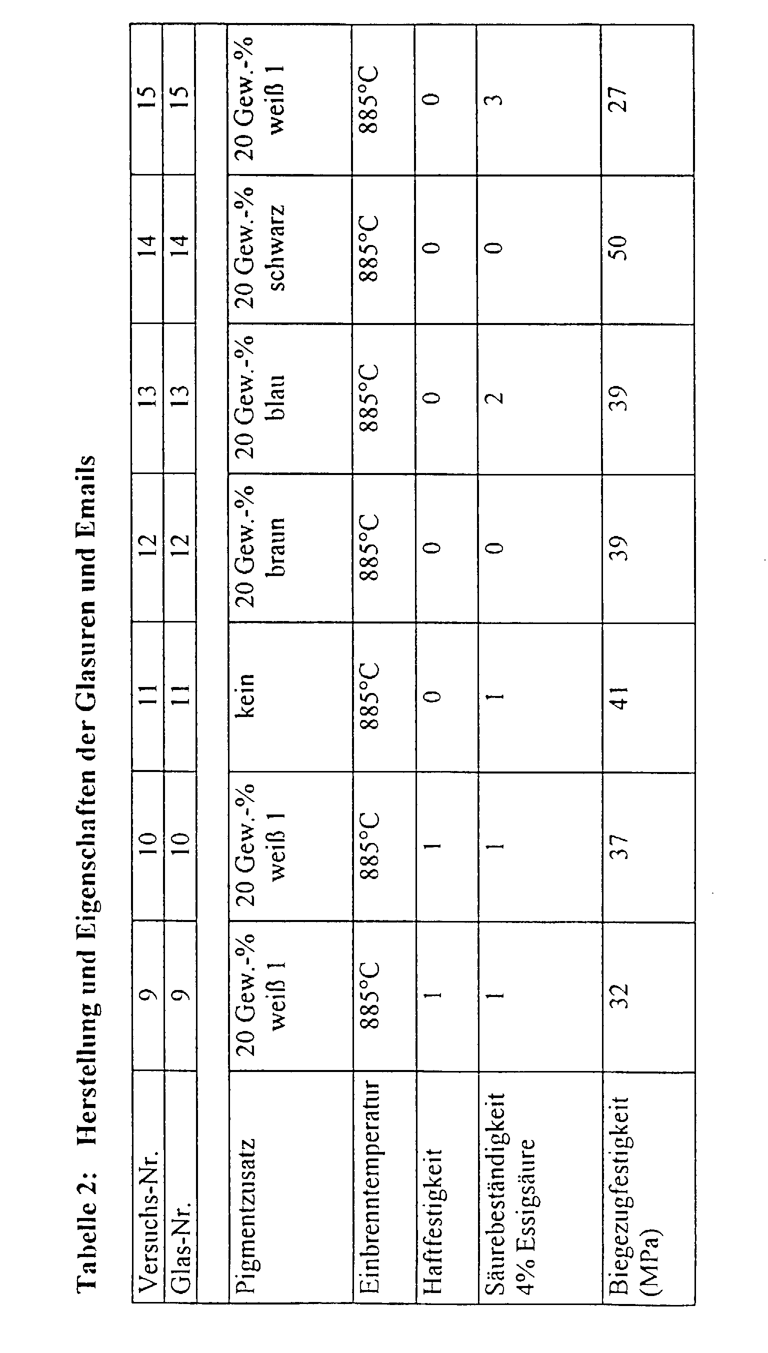

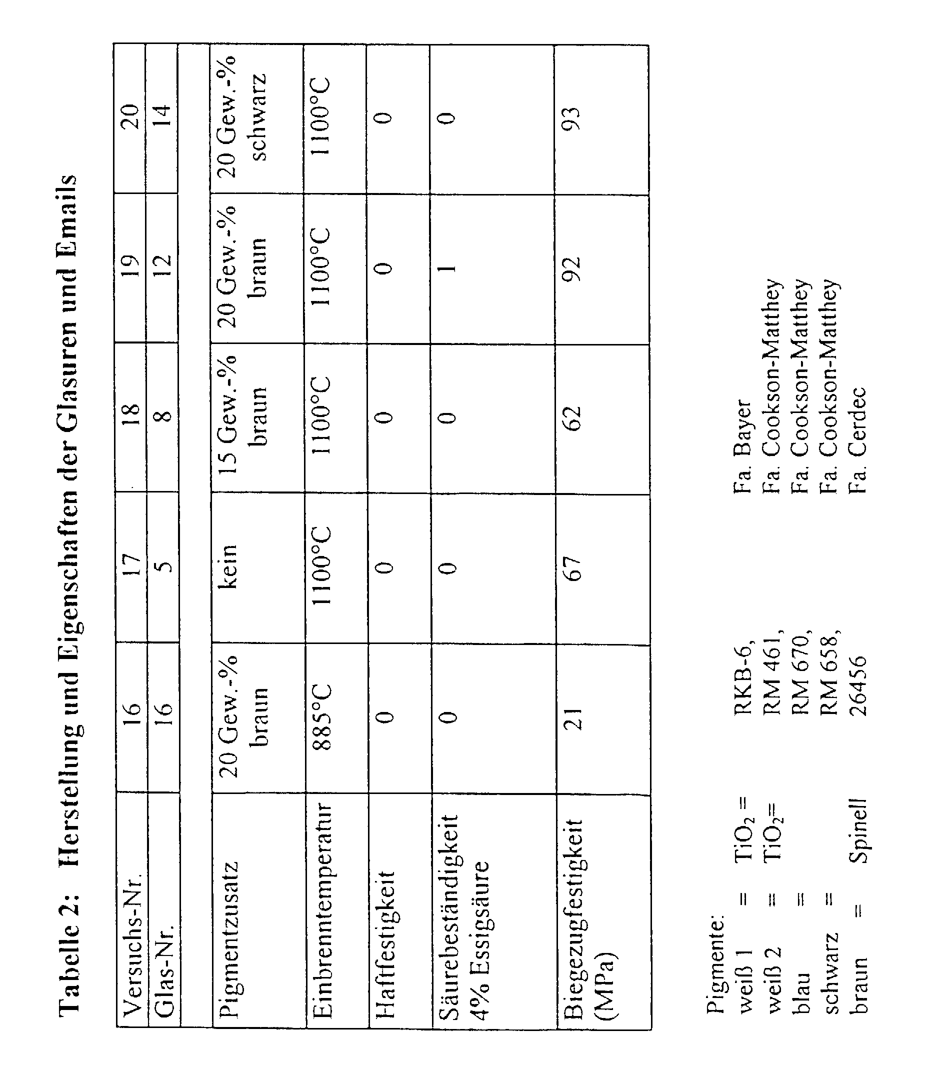

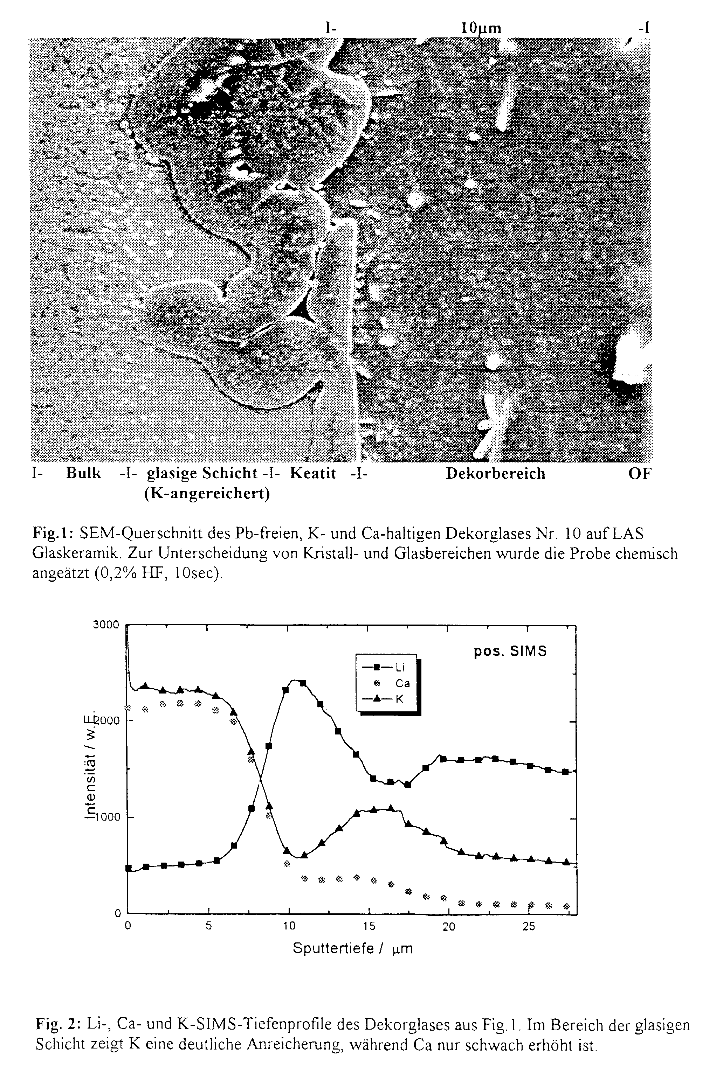

## Patentansprüche

1. Blei- und cadmiumfreies Glas zum Glasieren, Emaillieren und Dekorieren von Gläsern oder Glaskeramiken, die nach der Kristallisation Hochquarz- und/oder Keatit-Mischkristalle als Hauptkristallphase enthalten und eine niedrige Wärmeausdehnung von weniger als 2 x 10⁻⁶/K zwischen 20 und 700°C aufweisen, **gekennzeichnet durch**
eine Zusammensetzung (in Gew-%) von:
Li₂O 0 - 5
Na₂O 0 - 5
K₂O < 2
Σ Li₂O + Na₂O + K₂O 1 - 10
MgO 0 - 3
CaO 0-4
SrO 0-4
BaO 0 - 4
ZnO 0 - 4
B₂O₃ 15 - 27
Al₂O₃ 10 - 20
SiO₂ 43 - 58
TiO₂ 0 - 3
ZrO₂ 0 - 4
Sb₂O₃ 0 - 2
F 0 - 3,
im Austausch gegen Sauerstoff und mit bis zu 30 Gew-% eines bei Brenntemperatur beständigen Pigmentes, wobei die mittlere Biegezugfestigkeit der vollflächig dekorierten Glaskeramiken nach dem Einbrand größer als 30 MPa ist.

2. Glas nach Anspruch 1,
**gekennzeichnet durch**
eine Zusammensetzung von (in Gew-%):
Li₂O 1 - 4
Na₂O 0 - 3
K₂O < 2
Σ Li₂O + Na₂O + K₂O 2 - 7
MgO 0-3
CaO 0-3
SrO 0-4
BaO 0 - 3
Σ MgO + CaO + SrO + BaO 1 - 9
ZnO 0 - 3
B₂O₃ 15 - 23
Al₂O₃ 14 - 19
SiO₂ 48 - 57
TiO₂ 0 - 3
ZrO₂ 0 - 3
Sb₂O₃ 0 - 1
F 0 - 2,
im Austausch gegen Sauerstoff und mit bis zu 30 Gew-% eines bei Brenntemperatur beständigen Pigmentes.

3. Glaszusammensetzung nach den Ansprüchen 1 oder 2,
gekennzeichnet durch
bis zu 3 Gew-% eines oder mehrere der Oxide Bi₂O₃, La₂O₃, SnO₂, P₂O₅, wobei die Summe der Oxide kleiner ist als 5 Gew-%.

4. Glaszusammensetzung nach mindestens einem der Ansprüche 1 bis 3,
gekennzeichnet durch
Σ Li₂O + Na₂O + K₂O + F 2 - 7 Gew-%
Σ MgO + CaO + SrO + BaO 1 - 7 Gew-%
Σ Al₂O₃ + SiO₂ + TiO₂ + ZrO₂ + SnO₂ + La₂O₃ + Bi₂O₃ + P₂O₅ 64 - 75 Gew-%

5. Glaszusammensetzung nach mindestens einem der Ansprüche 1 bis 4,
**gekennzeichnet durch**
Transformationstemperaturen von 450 - 650°C, insbesondere 490 - 590°C, Erweichungstemperaturen von 600 - 850°C, insbesondere 640 - 800°C, Verarbeitungstemperaturen von 880 - 1150°C, insbesondere bei 900 - 1120°C und einem Wärmeausdehnungskoeffizienten α_{20/300} bei 3,5 bis 7 x 10⁻⁶/K, insbesondere 4 bis 6 x 10⁻⁶/K.

6. Glaszusammensetzung nach mindestens einem der Ansprüche 1 bis 5
**dadurch gekennzeichnet,**
daß das Glas eine mittlere Korngröße < 10 µm, insbesondere < 5 µm aufweist.

7. Glaszusammensetzung nach mindestens einem der Ansprüche 1 bis 6,
**dadurch gekennzeichnet,**
daß die Schichtdicke nach dem Einbrand < als 9 µm, insbesondere 2 - 7 µm beträgt.

8. Verfahren zur Herstellung einer mit einer Glaszusammensetzung nach mindestens einem der vorgehenden Ansprüche glasierten, emaillierten und dekorierten Glaskeramik,
**dadurch gekennzeichnet,**
daß das Einbrennen der Glasur-, Email-, oder Dekorschichten zusammen mit dem Keramisierungsprozeß des Glases zur Glaskeramik erfolgt.

## Claims

1. Lead- and cadmium-free glass for glazing, enamelling and decorating glasses or glass-ceramics which contain, after crystallization, high-quartz and/or keatite mixed crystals as main crystal phase and have a low coefficient of thermal expansion of less than 2 x 10⁻⁶/K at between 20 and 700°C, characterized by a composition (in % by weight) of:
Li₂O 0 - 5
Na₂O 0 - 5
K₂O <2
Σ Li₂O + Na₂O + K₂O 1 - 10
MgO 0 - 3
CaO 0 - 4
SrO 0 - 4
BaO 0 - 4
ZnO 0 - 4
B₂O₃ 15 - 27
Al₂O₃ 10 - 20
SiO₂ 43 - 58
TiO₂ 0 - 3
ZrO₂ 0 - 4
Sb₂O₃ 0 - 2
F 0 - 3
as replacement for oxygen and containing up to 30% by weight of a pigment which is resistant at the firing temperature, where the mean tensile strength in bending of the glass-ceramics with full-area decoration is greater than 30 MPa after firing.

2. Glass according to Claim 1, characterized by a composition of (in % by weight):
Li₂O 1 - 4
Na₂O 0 - 3
K₂O <2
Σ Li₂O + Na₂O + K₂O 2 - 7
MgO 0 - 3
CaO 0 - 3
SrO 0 - 4
BaO 0 - 3
Σ MgO + CaO + SrO + BaO 1 - 9
ZnO 0 - 3
B₂O₃ 15 - 23
Al₂O₃ 14 - 19
SiO₂ 48 - 57
TiO₂ 0 - 3
ZrO₂ 0 - 3
Sb₂O₃ 0 - 1
F 0 - 2
as replacement for oxygen and containing up to 30% by weight of a pigment which is resistant at firing temperature.

3. Glass composition according to Claims 1 or 2, characterized by a content of up to 3% by weight of one or more of the oxides Bi₂O₃, La₂O₃, SnO₂, and P₂O₄₅, where the sum of the oxides is less than 5% by weight.

4. Glass composition according to at least one of Claims 1 to 3, characterized by
Σ Li₂O + Na₂O + K₂O + F 2-7% by weight
Σ MgO + CaO + SrO + BaO 1-7% by weight
Σ Al₂O₃ + SiO₂ + TiO₂ + ZrO₂ + SₙO₂ + La₂O₃ + Bi₂O₃ + P₂O₅ 64-75% by weight

5. Glass composition according to at least one of Claims 1 to 4, characterized by a transition temperature of 450-650°C, in particular 490-590°C, a softening point of 600-850°C, in particular 640-800°C, and a working point of 880-1150°C, in particular from 900-1120°C and a coefficient of thermal expansion α_{20/300} of from 3.5 to 7 × 10⁻⁶/K, in particular 4 to 6 × 10⁻⁶/K.

6. Glass composition according to at least one of Claims 1 to 5, characterized in that the glass has a mean particle size of <10 µm, in particular <5 µm.

7. Glass composition according to at least one of Claims 1 to 6, characterized in that the layer thickness after firing is <9 µm, in particular 2-7 µm.

8. Process for the production of a glass-ceramic glazed, enamelled or decorated with a glass composition according to at least one of the preceding claims, characterized in that the firing of the glaze, enamel or decoration layer is carried out together with the ceramicization process of the glass to give the glass-ceramic.

## Revendications

1. Verre exempt de plomb et de cadmium pour le glaçage, l'émaillage et la décoration de verres ou de vitro-céramiques, comprenant, après la cristallisation, des cristaux mixtes de haut quartz et/ou de kéatite en tant que phase cristalline principale et présentant une faible dilatation thermique inférieure à 2 x 10⁻⁶ / K entre 20 et 700°C, **caractérisé par** une composition (en % en poids) de :
Li₂O 0 - 5
Na₂O 0 - 5
K₂O <2
Ó Li₂O + Na₂O + K₂O 1 - 10
MgO 0 - 3
CaO 0 - 4
SrO 0 - 4
BaO 0 - 4
ZnO 0 - 4
B₂O₃ 15 - 27
Al₂O₃ 10 - 20
SiO₂ 43 - 58
TiO₂ 0 - 3
ZrO₂ 0 - 4
Sb₂O₃ 0 - 2
F 0 - 3,
en échange de l'oxygène et
comprenant jusqu'à 30% en poids d'un pigment résistant à la température de cuisson, la résistance moyenne à la flexion sous tension des vitro-céramiques décorées sur toute leur surface étant supérieure à 30 MPa après la cuisson.

2. Verre selon la revendication 1,
caractérisé par
une composition de (en % en poids) :
Li₂O 1 - 4
Na₂O 0 - 3
K₂O <2
Ó Li₂O + Na₂O + K₂O 2 - 7
MgO 0 - 3
CaO 0 - 3
SrO 0 - 4
BaO 0 - 3
Ó MgO + CaO + SrO + BaO 1 - 9
ZnO 0 - 3
B₂O₃ 15 - 23
Al₂O₃ 14 - 19
SiO₂ 48 - 57
TiO₂ 0 - 3
ZrO₂ 0 - 3
Sb₂O₃ 0 - 1
F 0 - 2, en échange de l'oxygène
et comprenant jusqu'à 30% en poids d'un pigment résistant à la température de cuisson.

3. Composition de verre selon les revendications 1 ou 2, **caractérisée par**
jusqu'à 3% en poids d'un ou de plusieurs des oxides Bi₂O₃, La₂O₃, SnO₂, P₂O₅, la somme des oxydes étant inférieure à 5% en poids.

4. Composition de verre selon au moins l'une des revendications 1 à 3, **caractérisée par**
Ó Li₂O + Na₂O + K₂O + F 2 - 7% en poids
Ó MgO + CaO + SrO + BaO 1 - 7% en poids
Ó Al₂O₃ + SiO₂ + TiO₂ + ZrO₂ + SₙO₂ + La₂O₃ + Bi₂O₃ + P₂O₅ 64 - 75% en poids

5. Composition de verre selon au moins l'une des revendications 1 à 4, **caractérisée par**
des températures de transformation de 450 - 650°C, en particulier de 490 - 590°C, des températures de ramollissement de 600 - 850°C, en particulier de 640 - 800°C, des températures de traitement de 880 - 1150°C, en particulier à 900 - 1120°C, et un coefficient de dilatation thermique á_{20/300} de 3,5 à 7 x 10⁻⁶/K, en particulier de 4 à 6 x 10⁻⁶/K.

6. Composition de verre selon au moins l'une des revendications 1 à 5, **caractérisée en ce que**
le verre présente une granulométrie moyenne < 10 µm, en particulier < 5µm.

7. Composition de verre selon au moins l'une des revendications 1 à 6, **caractérisée en ce que**
l'épaisseur de couche après la cuisson est < 9 µm, en particulier comprise entre 2 et 7 µm.

8. Procédé de fabrication d'une vitro-céramique glacée, émaillée et décorée avec une composition de verre selon au moins l'une quelconque des revendications précédentes, **caractérisé en ce que**
la cuisson des couches de glaçage, d'émaillage ou de décoration s'effectue conjointement avec le procédé de céramisation du verre en vitro-céramique.
